# EUROPÄISCHE PATENTANMELDUNG

(11) **EP 3 954 480 A1**
(43) Veröffentlichungstag der Anmeldung: **16.02.2022**
(21) Anmeldenummer: 20190727.6
(22) Anmeldetag: 12.08.2020
(51) Int. Cl.: B22D 19/02, B22D 19/16, B22D 25/00, B22F 3/105, B33Y 10/00, B33Y 80/00

(54) **ADDITIV HERGESTELLTES FORMTEIL MIT AUSGESCHÄUMTEM HOHLRAUM**

(71) Anmelder: Siemens Aktiengesellschaft, 80333 München (DE)
(72) Erfinder: Schneider, Heinz-Ingo, 85598 Baldham (DE)

(57) **Zusammenfassung**

Eine Außenstruktur (3) eines Formteils (4) wird mittels eines additiven Herstellungsverfahrens der gerichteten Energieeinbringung hergestellt. Die Außenstruktur (3) weist mindestens einen Hohlraum (5) auf. Der mindestens eine Hohlraum (5) wird nach dem Herstellen der Außenstruktur (3) mittels eines technischen Schaums (7) ausgeschäumt.

## Beschreibung

Die vorliegende Erfindung geht aus von einem Produktionsverfahren für ein Formteil,
- wobei eine Außenstruktur des Formteils mittels eines additiven Herstellungsverfahrens der gerichteten Energieeinbringung hergestellt wird.

Die vorliegende Erfindung geht weiterhin aus von einer Produktionsmaschine zum Herstellen eines Formteils,
- wobei die Produktionsmaschine eine additive Herstellungseinrichtung aufweist, mittels derer eine Außenstruktur des Formteils mittels eines additiven Herstellungsverfahrens der gerichteten Energieeinbringung hergestellt wird.

Die vorliegende Erfindung geht weiterhin aus von einem Formteil,
- wobei das Formteil eine mittels eines additiven Herstellungsverfahrens der gerichteten Energieeinbringung hergestellte Außenstruktur aufweist.

Ein derartiges Produktionsverfahren, die zugehörige Produktionsmaschine und auch das Formteil selbst sind beispielsweise aus der EP 3 228 415 A1 bekannt.

Formteile können durch urformende, umformende, durch additive und durch subtraktive Herstellungsverfahren hergestellt werden. Bei einem urformenden Herstellungsverfahren wird flüssiges Material in eine Gussform gegossen, in der es erstarrt. Bei einem umformenden Herstellungsverfahren wird ein bestehender Körper durch Anwendung von Druck umgeformt. Typische Bearbeitungsweisen sind Walzen, Schmieden und Pressen. Bei einem subtraktiven Herstellungsverfahren wird von einem Materialblock stellenweise nach und nach Material abgetragen, bis das gewünschte Formteil hergestellt ist. Typische Bearbeitungsweisen sind Fräsen, Drehbearbeitungen und Bohren. Bei einem additiven Herstellungsverfahren wird - manchmal ausgehend von einem anderweitig hergestellten Grundkörper - stellenweise nach und nach Material aufgetragen, bis das gewünschte Formteil hergestellt ist. Typische Bearbeitungsweisen sind additive Herstellungsverfahren der gerichteten Energieeinbringung und Pulverbettverfahren.

Mittels Pulverbettverfahren können Formteile hergestellt werden, die filigrane Innenstrukturen aufweisen. Die Herstellungsgeschwindigkeit ist jedoch relativ gering. Auch ist die Größe der Formteile relativ begrenzt. Mittels additiver Herstellungsverfahren der gerichteten Energieeinbringung ist ein schnellerer Aufbau von Formteilen möglich. Es ist jedoch nicht möglich, Formteile mit filigranen Innenstrukturen herzustellen.

Weiterhin ist bekannt, Gussformen herzustellen und entsprechende Formteile zu gießen. Die Herstellung von Gussformen ist jedoch zeitaufwendig und teuer. Gussformen werden daher in der Regel nur für Massenprodukte erstellt, d.h. für Formteile, die in großer Stückzahl produziert werden.

Weiterhin ist bekannt, leichte Formteile aus technischem Schaum herzustellen. Nachteilig ist hierbei, dass die Außenseite der Formteile keine geschlossene äußere Schicht aufweist und weiterhin die Formteile meist schlecht bearbeitet werden können.

Die Aufgabe der vorliegenden Erfindung besteht darin, Möglichkeiten zu schaffen, mittels derer auf effiziente Weise leichte, stabile Formteile mit einer geschlossenen, festen Außenstruktur hergestellt werden können.

Die Aufgabe wird durch ein Produktionsverfahren mit den Merkmalen des Anspruchs 1 gelöst. Vorteilhafte Ausgestaltungen des Produktionsverfahrens sind Gegenstand der abhängigen Ansprüche 2 bis 8.

Erfindungsgemäß wird ein Produktionsverfahren der eingangs genannten Art dadurch ausgestaltet,
- dass die Außenstruktur mindestens einen Hohlraum aufweist und
- dass der mindestens eine Hohlraum nach dem Herstellen der Außenstruktur mittels eines technischen Schaums ausgeschäumt wird.

Die vorliegende Erfindung nutzt also einerseits die Vorteile von additiven Herstellungsverfahren der gerichteten Energieeinbringung, um schnell und kostengünstig die Außenstruktur des Formteils herzustellen, nutzt dann aber zum Herstellen der leichten, stabilisierenden Füllung ein anderes Verfahren, nämlich das Ausschäumen.

Additive Herstellungsverfahren der gerichteten Energieeinbringung sind Fachleuten allgemein bekannt. Bei Herstellungsverfahren der gerichteten Energieeinbringung (englisch: DED = directed energy deposition) handelt es sich - vergleiche beispielsweise die DIN EN ISO/ASTM 52900 vom Juni 2017 und dort Abschnitt 2.2.2 - um einen additiven Fertigungsprozess, bei dem eine fokussierte Wärmeenergie verwendet wird, um einen Werkstoff während des Absetzens durch Schmelzen mit dem Material zu vereinigen, auf dem der Werkstoff abgesetzt wird. Die fokussierte Wärmeenergie wird durch eine Energiequelle bereitgestellt. Die Energiequelle kann beispielsweise ein Laser, ein Elektronenstrahlgenerator, eine Lichtbogenquelle oder ein Plasmagenerator sein. Dementsprechend kann die Energie beispielsweise in Form eines Laserstrahls, eines Elektronenstrahls, eines Lichtbogens oder eines Plasmas bereitgestellt werden. Beispiele derartiger Herstellungsverfahren sind das sogenannte LPA (= Laser-Pulver-Auftragsschweißen, im englischen LMD = laser metal deposition), das WAAM-Verfahren (WAAM = wire arc additive manufacturing), das Laser-Draht-Auftragsschweißen, das Elektronenstrahl-Draht-Auftragsschweißen und andere mehr. Herstellungsverfahren der gerichteten Energieeinbringung stehen in der Regel im Gegensatz zu einem pulverbettbasierten Schmelzen (im englischen PBF = powder bed fusion), bei dem mittels Wärmeenergie gezielt Bereiche eines Pulverbetts aufgeschmolzen werden.

Auch technische Schäume sind Fachleuten allgemein bekannt. Es kann sich insbesondere um Metallschäume oder Polymerschäume handeln. Für Metallschäume kann rein beispielhaft auf das Merkblatt W 17 der Aluminium-Zentrale mit dem Titel "Aluminiumschäume - Herstellung, Anwendung, Recycling", herausgegeben vom Gesamtverband der Aluminiumindustrie e.V., Düsseldorf, DE, im Jahr 2007 mit der ISBN 3-937171-10-X verwiesen werden.

Mittels des erfindungsgemäßen Herstellungsverfahrens können somit sehr einfach und effizient dünnwandige Formteile hergestellt werden, die dennoch eine hohe Stabilität aufweisen. Vorzugsweise weist demzufolge die Außenstruktur des Formteils eine Wandstärke auf, wobei die Wandstärke erheblich kleiner als eine charakteristische Länge des mindestens einen Hohlraums ist.

Als charakteristische Länge des Hohlraums kommt insbesondere ein äquivalenter Durchmesser in Frage. Der äquivalente Durchmesser kann der Durchmesser eines fiktiven Kreises sein, dessen Fläche mit dem Querschnitt des Hohlraums übereinstimmt. In diesem Fall wird der Querschnitt vorzugsweise orthogonal zu einer Längserstreckung des Formteils ermittelt. Alternativ kann der äquivalente Durchmesser der Durchmesser einer fiktiven Kugel sein, deren Volumen mit dem Volumen des Hohlraums übereinstimmt. Der Begriff "erheblich kleiner" bezeichnet einen Unterschied um mindestens eine Größenordnung, also den Faktor 10.

Vorzugsweise ist der mindestens eine Hohlraum im wesentlichen geschlossen. Der Begriff "im wesentlichen geschlossen" soll bedeuten, dass der Hohlraum nach dem Herstellen der Außenstruktur zwar noch von außen zugänglich ist (sonst könnte er nicht ausgeschäumt werden), der Zugang aber nur noch an wenigen Stellen möglich ist. Beispielsweise kann die verbleibende Öffnung orthogonal zu einer Vorzugsrichtung der Außenstruktur gesehen eine Maximalerstreckung und in der Vorzugsrichtung gesehen eine Maximaltiefe aufweisen und kann weiterhin die Maximaltiefe mindestens doppelt so groß wie die Maximalerstreckung sein, vorzugsweise sogar noch größer, beispielsweise mindestens dreimal so groß, mindestens fünfmal so groß oder mindestens zehnmal so groß.

Es ist möglich, dass der mindestens eine Hohlraum nach dem Ausschäumen offen bleibt, dass also der technische Schaum zumindest stellenweise zugänglich ist. Vorzugsweise jedoch wird der mindestens eine Hohlraum mittels eines weiteren additiven Herstellungsverfahrens verschlossen. Das weitere additive Herstellungsverfahren kann dasselbe Herstellungsverfahren sein, das zum Herstellen der Außenstruktur verwendet wurde. Alternativ kann es sich um ein anderes additives Herstellungsverfahren handeln. Wenn es sich um dasselbe Herstellungsverfahren handelt, kann sogar dieselbe Herstellungseinrichtung verwendet werden.

Mittels additiver Herstellungsverfahren der gerichteten Energieeinbringung können nur relativ grobe Strukturen hergestellt werden. Insbesondere die Außenstruktur weist somit auch relativ grobe Oberflächen auf. An der Innenseite, an der sich der technische Schaum befindet, ist dies in aller Regel unkritisch. Die Außenfläche muss hingegen oftmals noch bearbeitet werden. In vielen Fällen wird daher die Außenseite der Außenstruktur vor oder nach dem Ausschäumen des mindestens einen Hohlraums mittels mindestens eines subtraktiven Herstellungsverfahrens bearbeitet.

Subtraktive Herstellungsverfahren sind Fachleuten allgemein bekannt. Beispiele derartiger Herstellungsverfahren sind Drehen (auf einer Drehbank, im englischen lathing on a lathe), Fräsen, Schleifen, Polieren und Bohren. Im vorliegenden Fall kommen - je nach Anforderung - insbesondere Drehverfahren und Fräsverfahren in Frage.

Stabile Leichtbauteile werden insbesondere bei Luft- und Raumfahrzeugen benötigt. Vorzugsweise umfasst das Formteil daher mindestens eine Außenfläche eines Luft- oder Raumfahrzeugs. In alternativen vorteilhaften Ausgestaltungen umfasst das Formteil mindestens eine Außenfläche eines Straßen- oder Schienenfahrzeugs. Es kann sich aber auch um ein anderes Formteil handeln, beispielsweise ein Formteil des allgemeinen Maschinenbaus.

Im Gegensatz zu Pulverbettverfahren können mittels additiver Herstellungsverfahren der gerichteten Energieeinbringung auch große Formteile hergestellt werden. Es ist daher ohne weiteres möglich, dass die Außenstruktur eine Fläche von mehreren Quadratdezimetern bis hin zu mehreren Quadratmetern aufweist.

Vorzugsweise besteht die Außenstruktur aus einem stahl-, aluminium-, nickel- oder titanbasierten Material und/oder aus einer Superlegierung. Superlegierungen sind Fachleuten allgemein bekannt. Rein beispielhaft kann auf die entsprechenden Einträge unter den Begriffen "Superlegierung" und "Superalloy" in der deutschen bzw. in der englischen Wikipedia verwiesen werden. Insbesondere nickel- oder titanbasierte Materialien und Superlegierungen können mittels subtraktiver Herstellungsverfahren oftmals nur schwer bearbeitet werden.

Die Aufgabe wird weiterhin durch eine Produktionsmaschine mit den Merkmalen des Anspruchs 9 gelöst. Vorteilhafte Ausgestaltungen der Produktionsmaschine sind Gegenstand der abhängigen Ansprüche 10 und 11.

Erfindungsgemäß wird eine Produktionsmaschine der eingangs genannten Art dadurch ausgestaltet,
- dass die Produktionsmaschine eine Ausschäumeinrichtung aufweist, mittels derer nach dem Herstellen der Außenstruktur mindestens ein Hohlraum der Außenstruktur mittels eines technischen Schaums ausgeschäumt wird.

Es ist möglich, dass die additive Herstellungseinrichtung und die Ausschäumeinrichtung derart angeordnet sind, dass die Au-ßenstruktur zwischen dem Herstellen der Außenstruktur und dem Ausschäumen des mindestens einen Hohlraum nicht translatorisch bewegt werden muss. Alternativ kann eine derartige translatorische Bewegung erforderlich sein, beispielsweise vom Arbeitsraum der additiven Herstellungseinrichtung zum Arbeitsraum der Ausschäumeinrichtung.

Vorzugsweise weist die Produktionsmaschine eine subtraktive Bearbeitungseinrichtung auf, mittels derer eine Außenseite der Außenstruktur vor oder nach dem Ausschäumen des mindestens einen Hohlraums mittels mindestens eines subtraktiven Herstellungsverfahrens bearbeitet wird. In diesem Fall ist die vollständige Herstellung des Formteils (einschließlich der subtraktiven Bearbeitung) in ein und derselben Produktionsmaschine möglich.

Vorzugsweise ist mittels der Produktionsmaschine ein Formteil herstellbar, dessen Außenstruktur eine Fläche von mehreren Quadratdezimetern bis hin zu mehreren Quadratmetern aufweist. Dann ist auch die Herstellung großer Formteile möglich.

Hiermit korrespondierend weist ein erfindungsgemäßes Formteil eine mittels eines additiven Herstellungsverfahrens der gerichteten Energieeinbringung hergestellte Außenstruktur auf, die ihrerseits mindestens einen mit einem technischen Schaum ausgeschäumten Hohlraum aufweist. Vorteilhafte Ausgestaltungen des Formteils ergeben sich durch die Art und Weise der Herstellung des Formteils, siehe die obenstehenden Erläuterungen zum Produktionsverfahren.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Produktionsmaschine für ein Formteil,
- FIG 2: ein Formteil,
- FIG 3: ein Formteil,
- FIG 4: eine Produktionsmaschine für ein Formteil,
- FIG 5: eine Produktionsmaschine für ein Formteil und
- FIG 6: ein Formteil.

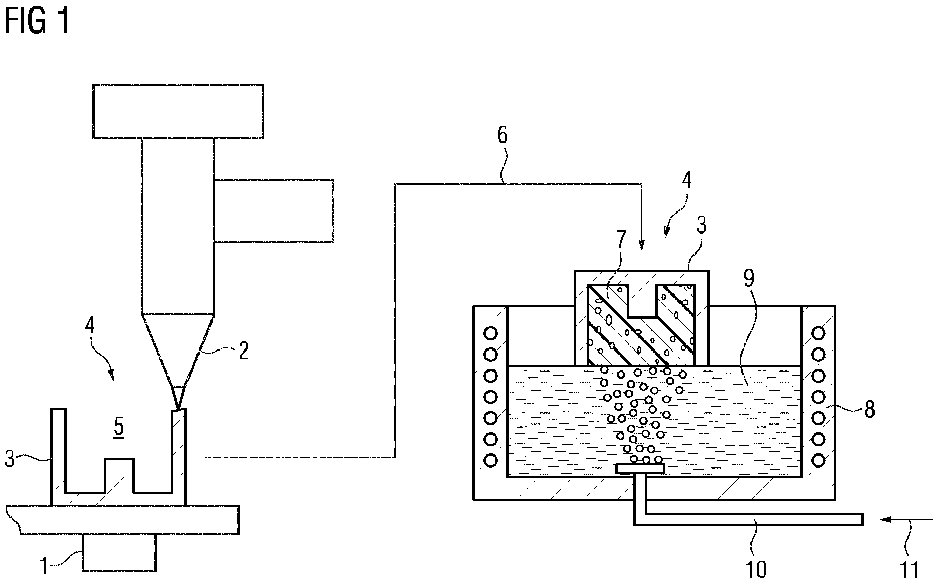

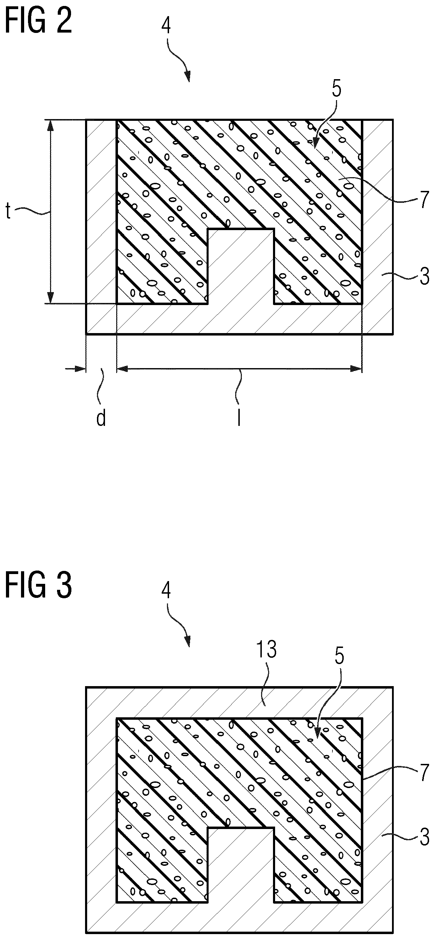

Gemäß FIG 1 weist eine additive Herstellungseinrichtung eine Aufnahme 1 und einen Bearbeitungskopf 2 auf. Der Bearbeitungskopf 2 ist relativ zur Aufnahme 1 zumindest translatorisch positionierbar. Oftmals ist auch eine rotatorische Orientierung einstellbar. Mittels des Bearbeitungskopfes 2 wird auf der Aufnahme 1 nach und nach in Schichten mittels eines additiven Herstellungsverfahrens der gerichteten Energieeinbringung eine Außenstruktur 3 eines Formteils 4 (siehe FIG 2) aufgebaut bzw. hergestellt. Das zugehörige Teileprogramm zum Ansteuern der additiven Herstellungseinrichtung kann in an sich bekannter Art und Weise mittels eines CAM-Systems aus den CAD-Daten des Formteils 4 erstellt worden sein.

Die Außenstruktur 3 besteht aus Metall, beispielsweise Stahl oder Aluminium. Insbesondere im Falle von hohen thermischen Belastungen des Formteils 4 besteht die Außenstruktur 3 oftmals aus einem nickel- oder titanbasierten Material und/oder aus einer Superlegierung. Die Außenstruktur 3 weist mindestens einen Hohlraum 5 auf. Der mindestens eine Hohlraum 5 ist, solange das additive Herstellen der Außenstruktur 3 erfolgt, in der Regel nach oben offen.

Die Außenstruktur 3 wird nach dem Herstellen, wie in FIG 1 durch einen Pfeil 6 angedeutet, in eine Ausschäumeinrichtung transferiert. Dort wird die Außenstruktur 3 in der Regel derart orientiert, dass der mindestens eine Hohlraum 5 nach unten offen ist. Mittels der Ausschäumeinrichtung wird der mindestens eine Hohlraum 5 mittels eines technischen Schaums 7 ausgeschäumt. Der technische Schaum 7 kann nach Bedarf ein Metallschaum oder ein Polymerschaum sein. Welcher technische Schaum 7 verwendet wird, kann insbesondere in Abhängigkeit von der mechanischen und/oder thermischen Belastung des Formteils 4 bestimmt werden.

Zum Ausschäumen der Außenstruktur 3 mit dem technischen Schaum 7 kann die Ausschäumeinrichtung beispielsweise einen Behälter 8 aufweisen, in dem sich eine Schmelze 9 des technischen Schaums 7 befindet. Die Schmelze 9 kann bei Bedarf mit Keramikpartikeln angereichert sein. Soweit erforderlich, kann der Behälter 8 eine Heizung umfassen. In die Schmelze 9 wird über eine Zuführung 10 ein Schaumgas 11 eingeblasen und so der technische Schaum 7 erzeugt. Der technische Schaum 7 steigt entsprechend der Darstellung in FIG 1 in der Schmelze 9 nach oben und füllt dadurch den Hohlraum 5.

FIG 2 zeigt das so hergestellte Formteil 4, also mit bereits ausgeschäumter Außenstruktur 3. Gemäß FIG 2 weist die Außenstruktur 3 eine Wandstärke d auf. Weiterhin weist der mindestens eine Hohlraum 5 eine charakteristische Länge l und eine Tiefe t auf. Die Wandstärke d ist erheblich kleiner (in der Regel mindestens eine Größenordnung kleiner) als die charakteristische Länge l. Weiterhin ist aus FIG 2 erkennbar, dass der mindestens eine Hohlraum 5 im wesentlichen geschlossen ist.

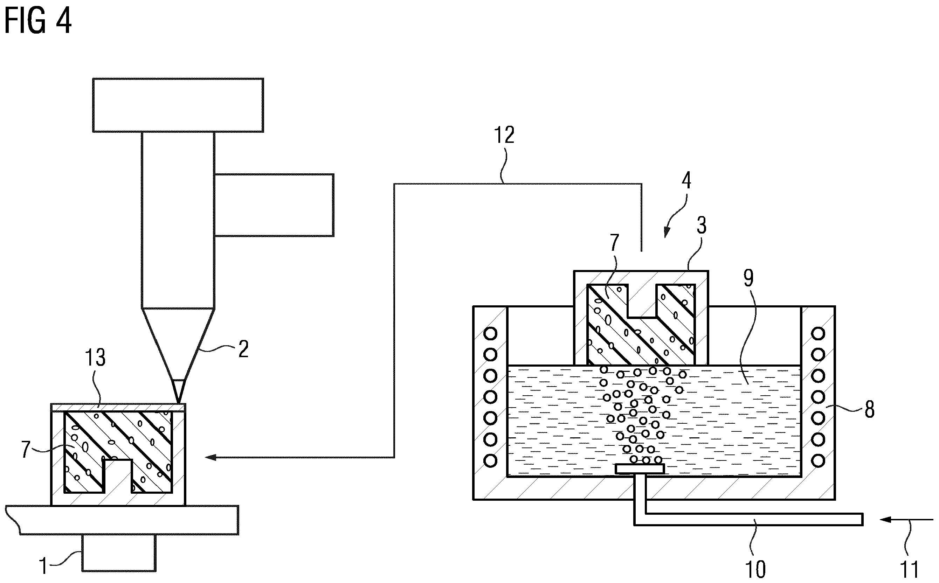

Es ist entsprechend der Darstellung in FIG 3 sogar möglich, dass der mindestens eine Hohlraum 5 vollständig geschlossen ist. In diesem Fall wird das Formteil 3 nach dem Ausschäumen, wie in FIG 4 durch einen Pfeil 12 angedeutet, wieder in die additive Herstellungseinrichtung transferiert. Dort wird der mindestens eine Hohlraum 5 entsprechend der Darstellung in FIG 4 mittels eines weiteren additiven Herstellungsverfahrens verschlossen. Beispielsweise kann der Hohlraum 5 mit einem Deckel 13 verschlossen werden. Alternativ zu einem Transfer in die additive Herstellungseinrichtung, mittels derer bereits die Außenstruktur 3 hergestellt wurde, ist es möglich, das Formteil 4 nach dem Ausschäumen der Außenstruktur 3 in eine andere additive Herstellungseinrichtung zu transferieren und den mindestens einen Hohlraum 5 dort zu verschließen. Während dieses Arbeitsvorgangs ist der Hohlraum 5 in der Regel wieder nach oben hin offen.

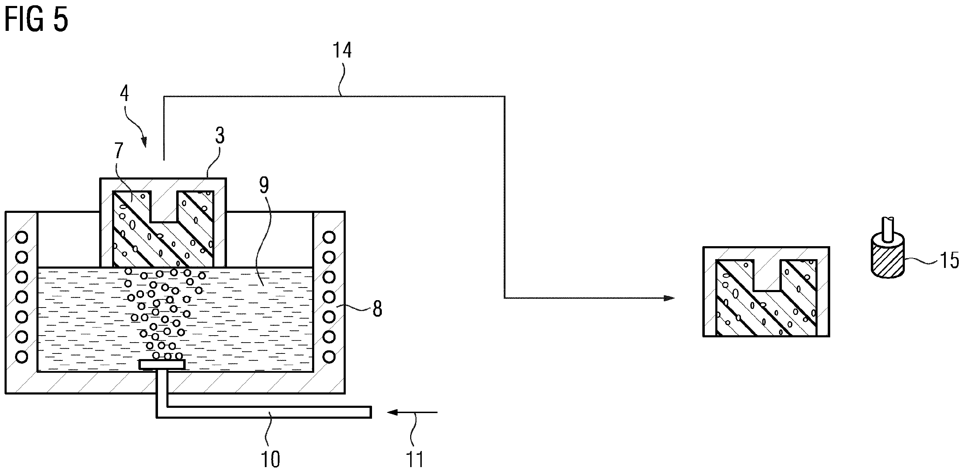

Mittels des additiven Herstellungsverfahrens der gerichteten Energieeinbringung können nur relativ grobe Strukturen hergestellt werden. In vielen Fällen wird daher das Formteil 4 in eine subtraktive Bearbeitungseinrichtung transferiert. Dieser Transfer kann vor dem Ausschäumen des mindestens einen Hohlraums 5 erfolgen. Alternativ kann dieser Transfer, wie in FIG 5 durch einen Pfeil 14 angedeutet ist, nach dem Ausschäumen des mindestens einen Hohlraums 5 erfolgen. Falls ein vollständiges Verschließen des mindestens einen Hohlraum 5 erfolgt, kann dieser Transfer auch nach dem vollständigen Verschließen des mindestens einen Hohlraums 5 erfolgen. In der subtraktiven Herstellungseinrichtung wird die Außenseite der Außenstruktur 3 mittels mindestens eines subtraktiven Herstellungsverfahrens bearbeitet. Beispielsweise können ein Drehen (englisch lathing), ein Fräsen (Schruppen) und/oder ein Schleifen (Schlichten) und/oder ein Polieren (englisch honing) erfolgen. Rein beispielhaft ist in FIG 5 als Bearbeitungswerkzeug 15 ein Fräskopf dargestellt. Die Orientierung des Formteils 4 während der subtraktiven Bearbeitung kann nach Bedarf sein und sich auch während der subtraktiven Bearbeitung ändern.

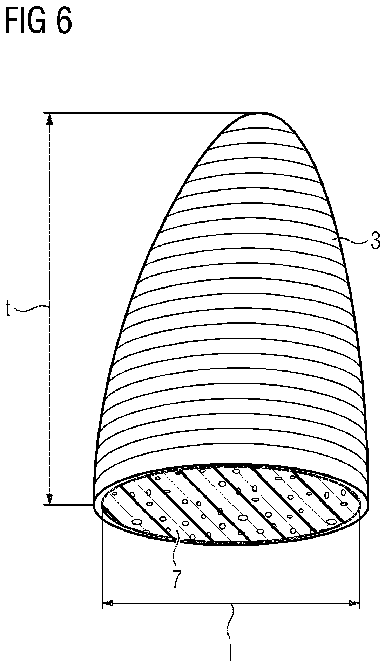

Das Formteil 4 kann mindestens eine Außenfläche eines Luftfahrzeugs umfassen. Rein beispielhaft ist das Formteil 4 in FIG 6 als Flügelspitze einer Tragfläche eines Flugzeugs dargestellt. Man erkennt zunächst den geschichtete Aufbau der Außenstruktur 3, der durch die Art und Weise der additiven Herstellung der Außenstruktur 3 bedingt ist. Weiterhin erkennt man den mit dem technischen Schaum 7 ausgeschäumten Hohlraum 5. Schließlich ist ersichtlich, dass die Wandstärke d erheblich kleiner als die charakteristische Länge l ist.

Alternativ kann das Formteil 4 mindestens eine Außenfläche eines Straßen-, Schienen- oder Raumfahrzeugs umfassen. Auch in diesem Fall gelten die obenstehend für die Flügelspitze erläuterten Ausführungen in prinzipiell gleicher Art und Weise.

In vielen Fällen weist das Formteil 4 nennenswerte Abmessungen auf. Insbesondere kann die Außenstruktur 3 eine Fläche von einigen Quadratdezimetern bis hin zu mehreren Quadratmetern aufweisen. Die Fläche der Außenstruktur 3 im Sinne der genannten Definition ist die äußere Fläche der Außenstruktur 3, also die von außen sichtbare Fläche der Außenstruktur 3. Sie umfasst insbesondere nicht diejenigen Teile der (vollständigen) Oberfläche der Außenstruktur 3, die den Hohlraum 5 begrenzen und/oder den technischen Schaum 7 kontaktieren.

Es ist möglich, dass die additive Herstellungseinrichtung und die Ausschäumeinrichtung voneinander unabhängige Einrichtungen sind. Vorzugsweise sind sie jedoch entsprechend der Darstellung in den FIG 1 und 4 Bestandteile einer einheitlichen Produktionsmaschine. Gegebenenfalls kann entsprechend der Darstellung in FIG 5 zusätzlich auch die subtraktive Bearbeitungseinrichtung ein Bestandteil der Produktionsmaschine sein. Falls der mindestens eine Hohlraum 5 vollständig geschlossen wird und hierfür eine andere additive Herstellungseinrichtung verwendet wird, kann auch die andere additive Herstellungseinrichtung ein Bestandteil der Produktionsmaschine sein.

Zusammengefasst betrifft die vorliegende Erfindung somit folgenden Sachverhalt:
Eine Außenstruktur 3 eines Formteils 4 wird mittels eines additiven Herstellungsverfahrens der gerichteten Energieeinbringung hergestellt. Die Außenstruktur 3 weist mindestens einen Hohlraum 5 auf. Der mindestens eine Hohlraum 5 wird nach dem Herstellen der Außenstruktur 3 mittels eines technischen Schaums 7 ausgeschäumt.

Die vorliegende Erfindung weist viele Vorteile auf. So können insbesondere in kurzer Zeit große Formteile 4 hergestellt werden, die ein geringes Gewicht und eine hohe Stabilität miteinander kombinieren. Die positiven Eigenschaften von additiven Herstellungsverfahren der gerichteten Energieeinbringung einerseits, Formteile 4 mit dünnen Wänden schnell und flexibel herstellen zu können, werden mit den positiven Eigenschaften technischer Schäume 7 für Leichtbauteile kombiniert. Auch ist jederzeit eine flexible Umstellung auf ein neuartiges Formteil 4 möglich. Weiterhin können ohne weiteres Multimaterialteile hergestellt werden, also Formteile 4, bei denen die Außenstruktur 3 aus verschiedenen Materialien besteht. Die Materialien können gegebenenfalls sogar deutlich unterschiedliche Eigenschaften wie beispielsweise mechanische Festigkeit oder Schmelzpunkte aufweisen. Weiterhin kann auch der technische Schaum 7 einen völlig anderen Schmelzpunkt aufweisen als das Material bzw. die Materialien der Außenstruktur 3. Darüber hinaus ist auch eine Fertigung von Außenstrukturen 3 aus Materialien möglich, die nur schwer zerspanbar sind, beispielsweise die bereits genannten Materialien auf Nickel- oder Titanbasis.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Produktionsverfahren für ein Formteil (4),
- wobei eine Außenstruktur (3) des Formteils (4) mittels eines additiven Herstellungsverfahrens der gerichteten Energieeinbringung hergestellt wird,
- wobei die Außenstruktur (3) mindestens einen Hohlraum (5) aufweist und
- wobei der mindestens eine Hohlraum (5) nach dem Herstellen der Außenstruktur (3) mittels eines technischen Schaums (7) ausgeschäumt wird.

2. Produktionsverfahren nach Anspruch 1,
**dadurch gekennzeichnet,**
**dass** die Außenstruktur (3) des Formteils (4) eine Wandstärke (d) aufweist und dass die Wandstärke (d) erheblich kleiner als eine charakteristische Länge (l) des mindestens einen Hohlraums (5) ist.

3. Produktionsverfahren nach Anspruch 1 oder 2,
**dadurch gekennzeichnet,**
**dass** der mindestens eine Hohlraum (5) im wesentlichen geschlossen ist.

4. Produktionsverfahren nach Anspruch 1, 2 oder 3,
**dadurch gekennzeichnet,**
**dass** der mindestens eine Hohlraum (5) nach dem Ausschäumen mittels eines weiteren additiven Herstellungsverfahrens verschlossen wird.

5. Produktionsverfahren nach einem der obigen Ansprüche,
**dadurch gekennzeichnet,**
**dass** die Außenseite der Außenstruktur (3) vor oder nach dem Ausschäumen des mindestens einen Hohlraums (5) mittels mindestens eines subtraktiven Herstellungsverfahrens bearbeitet wird.

6. Produktionsverfahren nach einem der obigen Ansprüche,
**dadurch gekennzeichnet,**
**dass** das Formteil (4) mindestens eine Außenfläche eines Luft-, Straßen-, Schienen- oder Raumfahrzeugs umfasst.

7. Produktionsverfahren nach einem der obigen Ansprüche,
**dadurch gekennzeichnet,**
**dass** die Außenstruktur (3) eine Fläche von einigen Quadratdezimetern bis hin zu mehreren Quadratmetern aufweist.

8. Produktionsverfahren nach einem der obigen Ansprüche,
**dadurch gekennzeichnet,**
**dass** die Außenstruktur (3) aus einem stahl-, aluminium-, nickel- oder titanbasierten Material und/oder aus einer Superlegierung besteht.

9. Produktionsmaschine zum Herstellen eines Formteils,
- wobei die Produktionsmaschine eine additive Herstellungseinrichtung aufweist, mittels derer eine Außenstruktur (3) des Formteils (4) mittels eines additiven Herstellungsverfahrens der gerichteten Energieeinbringung hergestellt wird,
- wobei die Produktionsmaschine eine Ausschäumeinrichtung aufweist, mittels derer nach dem Herstellen der Außenstruktur (3) mindestens ein Hohlraum (5) der Außenstruktur (3) mittels eines technischen Schaums (7) ausgeschäumt wird.

10. Produktionsmaschine nach Anspruch 9,
**dadurch gekennzeichnet,**
**dass** die Produktionsmaschine eine subtraktive Bearbeitungseinrichtung aufweist, mittels derer eine Außenseite der Au-ßenstruktur (3) vor oder nach dem Ausschäumen des mindestens einen Hohlraums (5) mittels mindestens eines subtraktiven Herstellungsverfahrens bearbeitet wird.

11. Produktionsmaschine nach Anspruch 9 oder 10,
**dadurch gekennzeichnet,**
**dass** mittels der Produktionsmaschine ein Formteil (4) herstellbar ist, dessen Außenstruktur (3) eine Fläche von einigen Quadratdezimetern bis hin zu mehreren Quadratmetern aufweist.

12. Formteil,
- wobei das Formteil eine mittels eines additiven Herstellungsverfahrens der gerichteten Energieeinbringung hergestellte Außenstruktur (3) aufweist,
- wobei die Außenstruktur (3) mindestens einen mit einem technischen Schaum (7) ausgeschäumten Hohlraum (5) aufweist.

13. Formteil nach Anspruch 12,
**dadurch gekennzeichnet,**
**dass** die Außenstruktur (3) des Formteils (4) eine Wandstärke (d) aufweist und dass die Wandstärke (d) erheblich kleiner als eine charakteristische Länge (l) des mindestens einen Hohlraums (5) ist.

14. Formteil nach Anspruch 12 oder 13,
**dadurch gekennzeichnet,**
**dass** der mindestens eine Hohlraum (5) zumindest im wesentlichen geschlossen ist.

15. Formteil nach Anspruch 12, 13 oder 14,
**dadurch gekennzeichnet,**
**dass** die Außenstruktur (3) eine mittels mindestens eines subtraktiven Herstellungsverfahrens bearbeitete Außenseite aufweist.

16. Formteil nach einem der Ansprüche 11 bis 15,
**dadurch gekennzeichnet,**
**dass** das Formteil (4) mindestens eine Außenfläche eines Luft-, Straßen-, Schienen- oder Raumfahrzeugs umfasst.

17. Formteil nach einem der 11 bis 16,
**dadurch gekennzeichnet,**
**dass** die Außenstruktur (3) eine Fläche von einigen Quadratdezimetern bis hin zu mehreren Quadratmetern aufweist.

18. Formteil nach einem der Ansprüche 11 bis 17,
**dadurch gekennzeichnet,**
**dass** die Außenstruktur (3) aus einem stahl-, aluminium-, nickel- oder titanbasierten Material und/oder aus einer Superlegierung besteht.
